# EUROPEAN PATENT SPECIFICATION

(11) **EP 3 283 380 B1**
(45) Date of publication and mention of the grant of the patent: **03.03.2021**
(21) Application number: 16718171.8
(22) Date of filing: 14.04.2016
(51) Int. Cl.: B64G 1/00, B64G 1/64, B64G 1/26

(54) **SATELLITE STACKED LAUNCH AND ORBIT RAISING OPTIMIZATION**
OPTIMIERUNG DES GESTAPELTEN SATELLITENSTARTS UND DES AUFSTIEGS IN DEN ORBIT
OPTIMISATION DU LANCEMENT DE SATELLITES EMPILÉS ET DE LA SURÉLÉVATION D'ORBITE

(30) Priority: 15.04.2015 US 201562148064 P; 13.04.2016 US 201615098122
(43) Date of publication of application: 21.02.2018
(73) Proprietor: Space Systems / Loral LLC, Palo Alto, California 94303 (US)
(72) Inventor: TADROS, Alfred Heikal, Los Altos, CA 94022 (US); STOEN, Jeffrey Donald, Palo Alto, CA 94306 (US); MAHER, Adam, Palo Alto, CA 94303 (US)
(74) Representative: Beck Greener LLP
(86) International application number: PCT/US2016/027568
(87) International publication number: WO 2016/168484

(56) References cited:
- FR-A1- 3 004 166
- US-A1- 2014 061 386
- US-B2- 7 866 607

## Description

### TECHNICAL FIELD

This invention relates generally to a launch vehicle payload, including two or more spacecraft configured to be launched within a common fairing of the launch vehicle, and more particularly to a stacked launch configuration where at least a portion of orbit raising is performed with the two or more spacecraft coupled together and allocation of orbit raising capability between the two or more spacecraft is optimized.

### BACKGROUND

The assignee of the present invention designs and manufactures spacecraft for communications and broadcast services. The spacecraft are carried into space, into a transfer orbit or an operational orbit, for example, by a launch vehicle. Structures of such spacecraft commonly include a structural interface ring (the "launch vehicle adapter structure") or other load bearing structure which mates to an adapter ring or other load bearing structure or dispenser associated with the launch vehicle.

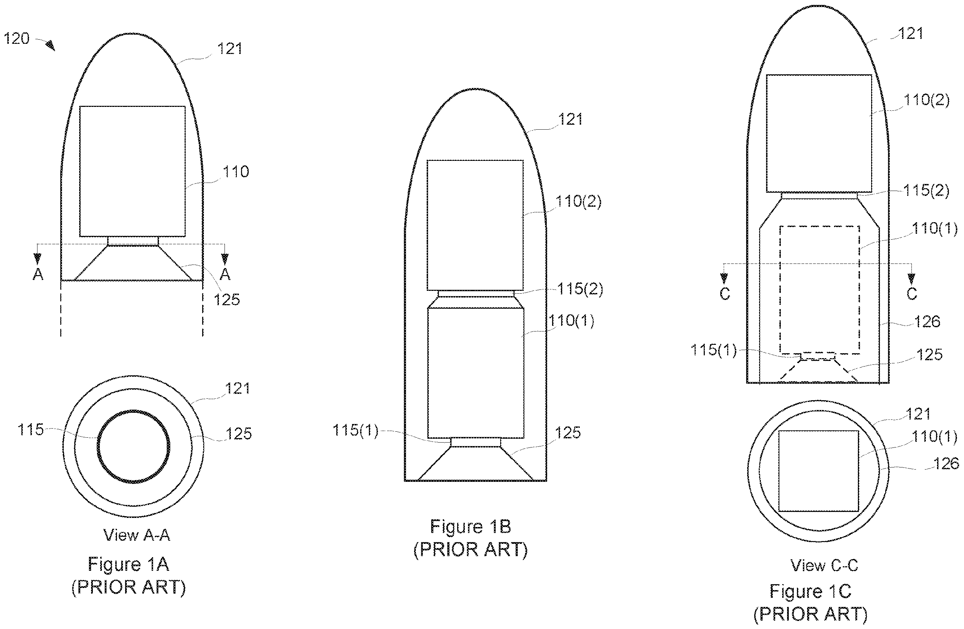

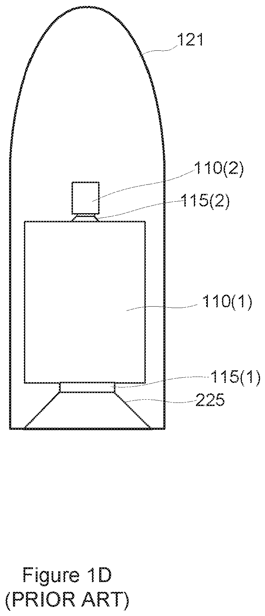

An example of a known technique for interfacing a payload to a launch vehicle is illustrated in FIG. 1A. In the illustrated example, a single spacecraft 110 is configured for launch on a launch vehicle 120. Launch vehicle 120 includes a payload fairing 121 and payload adapter 125.

It is sometimes desirable to configure two or more spacecraft for simultaneous launch on a single launch vehicle. Conventional stacked dual-launch configurations are illustrated in FIG. 1B, FIG. 1C and FIG. ID. In the configuration illustrated in FIG. 1B, the lower spacecraft 110(1) supports the upper spacecraft 110(2) during launch. In the configuration illustrated in FIG. 1C, a dual payload carrier 126 may be provided, as disclosed, for example, in U.S. Pat. No. 7,832,687, thereby alleviating the need for the lower spacecraft 110(1) to provide load bearing support for the upper spacecraft 110(2).

. In the configuration illustrated in FIG. ID, disclosed, for example, in U.S. Pat. No. 7,866,607, a primary satellite 110(1) is configured with an adapter 115(1) that supports a secondary payload 110(2). The secondary payload 110(2), referred to as a micro sat, may have a mass that is typically not greater than 400 pounds, or not greater than 10% of the launch mass of the primary satellite 110(1).

FR3004166 discloses a satellite system including a piggyback satellite and a carrier satellite, each having an Earth face. The piggyback satellite is attached to the carrier satellite by fastening elements that can be released on command. The piggyback satellite includes propulsion elements suitable for maintaining the piggyback satellite and the carrier satellite includes propulsion elements for performing a change of orbit of the satellite system including the carrier satellite and the piggyback satellite.

It is desirable to find improved arrangements whereby two or more payloads may be accommodated within a single payload fairing.

### SUMMARY

The present inventors have appreciated that a launch vehicle payload, including two or more spacecraft configured to be launched within a common fairing of the launch vehicle may be configured in stacked launch configuration where at least a portion of orbit raising is performed with the two or more spacecraft coupled together and allocation of orbit raising capability between the two or more spacecraft is optimized.

According to the invention, a method according to claims 1 and 6 is provided. Embodiments are defined by the dependent claims.

In some examples the first onboard propulsion subsystem may include one or both of high specific impulse electric propulsion equipment and high thrust bipropellant equipment. The second satellite may include a second on board propulsion subsystem, the second onboard propulsion subsystem including one or both of a monopropellant thruster and a cold gas thruster.

In some examples,_the payload stack may have a configuration design that results from an allocation of an orbit transfer maneuver capability between the first satellite and the second satellite. The allocation of the orbit transfer maneuver capability may be such that most or all of the orbit transfer maneuver capability is allocated to the propulsion subsystem of the first satellite. The allocation of the orbit transfer maneuver capability may result from a quantitative optimization of design parameters of the first satellite and a second satellite, the quantitative optimization including optimizing an objective function of the payload stack of at least two satellites.

In some examples, the respective payload of the first satellite and the respective payload of the second satellite may have approximately equal mass.

In some examples, the payload stack may have a configuration design that results from an allocation of orbit transfer maneuver capability between the first satellite and the second satellite. The allocation of orbit transfer maneuver capability may be determined as a result of the quantitative optimization of design parameters. The allocation of orbit transfer maneuver capability may be such that most or all of the orbit transfer maneuver capability is allocated to the propulsion subsystem of the first satellite.

In some examples, the objective function is cost, payload stack dry mass, or payload capacity.

In some examples, the first satellite may include a first on board propulsion subsystem, the first onboard propulsion subsystem including one or both of high specific impulse electric propulsion equipment and high thrust bipropellant equipment, and the second satellite may include a second on board propulsion subsystem, the second onboard propulsion subsystem including one or both of a monopropellant thruster and a cold gas thruster.

### BRIEF DESCRIPTION OF THE DRAWINGS

Features of the invention are more fully disclosed in the following detailed description of the preferred embodiments, reference being had to the accompanying drawings, in which like reference numerals designate like structural element, and in which:
Figures 1A-1D illustrate known techniques for interfacing one or more payloads within a launch vehicle fairing.
Figure 2 illustrates a satellite stacked launch and orbit raising, according to an implementation.
Figure 3 illustrates a method for designing a payload stack of at least two satellites, according to an implementation.
Figure 4 illustrates a method for delivering each satellite in a payload stack, launched by a single launch vehicle, into a respective operational orbit, according to an implementation.
Figure 5 illustrates an example of possible results of an optimization technique according to an implementation.

### DETAILED DESCRIPTION

Specific exemplary embodiments of the invention will now be described with reference to the accompanying drawings. This invention may, however, be embodied in many different forms, and should not be construed as limited to the embodiments set forth herein. Rather, these embodiments are provided so that this disclosure will be thorough and complete, and will fully convey the scope of the invention as defined by the claims to those skilled in the art.

It will be understood that when an element is referred to as being "connected" or "coupled" to another element, it can be directly connected or coupled to the other element, or intervening elements may be present. It will be understood that although the terms "first" and "second" are used herein to describe various elements, these elements should not be limited by these terms. These terms are used only to distinguish one element from another element. As used herein, the term "and/or" includes any and all combinations of one or more of the associated listed items. The symbol "/" is also used as a shorthand notation for "and/or".

The present inventors have appreciated that overall performance of a launch vehicle payload system that includes a first satellite and a second satellite to be launched as a stack (the "payload stack") may be improved by configuring the first satellite to perform at least some substantial part of orbit transfer maneuvers, for the benefit of both satellites, following deployment from the launch vehicle and prior to separation of the first satellite from the second satellite. In other words, the first spacecraft may include a first onboard propulsion subsystem configured to execute an orbit transfer maneuver for the payload stack from the first orbit to a second orbit.

As a result of the presently disclosed techniques, allocation of at least orbit transfer maneuver capabilities between a first satellite and a second satellite may be optimized, taking into account respective mission objectives of each satellite. For example, for some mission profiles, it may be advantageous to allocate at least a substantial portion of the orbit transfer maneuver capability to the propulsion subsystem of the first satellite. As a result, notwithstanding that each of the first satellite and the second satellite may have roughly similar mission durations and include a respective payload of roughly similar mass and complexity, the second satellite, in some implementations, may have a mass in the launch configuration, ("wet mass", including on board propellant) that is 30-70% of the wet mass of the first satellite. Moreover, a payload mass fraction, defined as the ratio of payload mass to wet mass, may be substantially different for the second satellite than for the first satellite, irrespective of whether the wet mass of the second satellite is smaller or larger than the wet mass of the first satellite.

The payload stack configuration may be determined by executing a quantitative optimization process that considers the mission requirements and objectives of each of the first satellite and the second satellite. In particular, it is contemplated to optimize the allocation of propulsion system capability across an entire stack of two or more satellites. In some implementations, the optimization process may assess and improve an objective function that represents overall performance of the payload stack in view of launch vehicle capabilities and pricing and orbit-raising requirements. In some implementations, the process includes optimization of fairing volume utilization and launch vehicle mass utilization capability.

In some implementations, for a stack of two satellites being launched to a first orbit, the method may determine an allocation of orbit raising capability (propulsion system and propellant) such that one of the two satellites provides at least a substantial portion of the velocity change (delta-V) associated with an orbit transfer maneuver of both satellites from the first orbit to a second orbit. For example, one satellite in the stack may include sufficient propellant to accomplish orbit raising of both satellites from geosynchronous transfer orbit (GTO) toward geosynchronous orbit. As a result, an increased payload capability across the full stack may be achieved as compared to a baseline where each of the two satellites independently has a propulsion system capability sized to separately perform orbit raising.

Alternatively, two or more spacecraft may be launched on separate launch vehicles into orbit where the two satellites would then dock and perform combined orbit transfer. The function of orbit raising (propulsion system, propellant and orbit raising control system) would be assigned disproportionately more to one satellite than to the other. As a result, an optimization of the full stack (in terms of payload, cost, mass, for example) may be achieved.

Particular implementations of the subject matter described in this disclosure can be implemented to realize one or more of the following potential advantages. The presently disclosed techniques provide a reduced total cost (taking into account spacecraft design and hardware cost, launch costs, and mission operation costs) versus traditional "dual-launch" spacecraft where each spacecraft, once separated from the launch vehicle, is designed to separately perform orbit acquisition maneuvers. The presently disclosed techniques may obtain a reduction in propulsion system mass by optimizing across two or more satellites rather than separately optimizing each individual satellite. As a result, an increase in payload performance may be obtained because the reduction in propulsion system mass/volume enables increased volume, power, and mass for the payloads of the optimized stack.

In some implementations, there may be a reduction in required control modes for at least one of the satellites because orbit raising/transfer functionality requirements are reduced or avoided. For example, there are no GTO to GEO control system requirements for a vehicle that is transferred to GEO upon another satellite that provides all the orbit raising functionality. This can include a reduced number of sensors, control modes, contingency modes, etc. Finally, there may be a reduction in ground segment cost where orbit acquisition is performed simultaneously for two satellites rather than separately. For example, fewer control and tracking ground stations may be required for orbit raising.

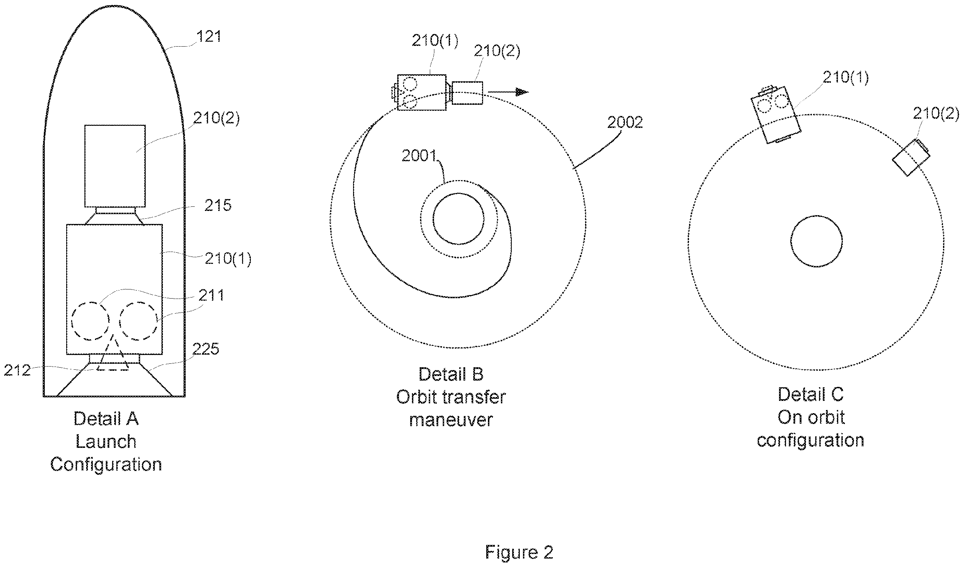

Referring now to Figure 2, in some implementations a system contemplated by the present disclosure includes at least two satellites, a first satellite 210(1) and a second satellite 210(2). As illustrated in Detail A, the satellites may be disposed, in a launch configuration, within a common fairing 221 of a single launch vehicle (not illustrated). Each of the first satellite 210(1) and the second satellite 210(2) may include a respective payload (not illustrated).

The launch vehicle includes a primary payload adapter 225, with which, in the launch configuration, the first satellite 210(1) is mechanically coupled. The first satellite 210(1) may include a secondary payload adapter 215, with which the second satellite, in the launch configuration, is mechanically coupled. The system of at least two satellites may be injected by the launch vehicle into a first orbit 2001 (Detail B). The first orbit 2001 may be, for example, a low earth orbit or a geosynchronous transfer orbit. Subsequent to being injected into the first orbit 2001, the system may be deployed from the launch vehicle. More particularly, the system may be deployed by separating the first satellite 210(1) from the primary payload adapter 225 while the second satellite 210(2) remains mechanically coupled with the secondary payload adapter 215.

At least the first satellite includes an onboard propulsion subsystem including, for example, propellant storage equipment 211 and one or more thrusters 212. Although not illustrated, the second satellite 210(2) may also include an onboard propulsion subsystem. The one or more thrusters 212 may include liquid or solid rocket engines and/or low thrust electric propulsion devices. The onboard propulsion subsystem of the first satellite 210(1) may be configured to execute one or more orbit transfer maneuvers, as illustrated conceptually in Detail B. More particularly, the on board propulsion subsystem of the first satellite 210(1) may be configured to transfer the stack of the first satellite 210(1) and the second satellite 210(2) from the first orbit 2001 to a second orbit 2002. For example, the on board propulsion subsystem of the first satellite 210(1) may be configured to transfer the stack from a low earth orbit toward a higher orbit or from a geosynchronous transfer orbit toward a geosynchronous transfer orbit. In some implementations, the second satellite 201(2) may include propellant tankage (not illustrated) coupled with one or more thrusters 212 of the first satellite 210(1). As a result, propellant initially stored in the second satellite 201(2) may be utilized by thrusters 212 of the first satellite 210(1) whether or not the second satellite 201(2) also includes thrusters.

In an on orbit configuration (Detail C), the first satellite 210(1) and the second satellite 210(2) have been separated. For example, the second satellite 210(2) may be detached from the secondary payload adapter of the first satellite 210(1) only after execution of the orbit transfer maneuver. Although illustrated in Detail C as being in a common orbit, it should be appreciated that, subsequent to separation of the second satellite 210(2) from the first satellite 210(1), further orbit transfer maneuvers may be performed by either or both of the first satellite 210(1) and the second satellite 210(2). Whether or not further orbit transfer maneuvers are performed, the respective payload of each of the first satellite and the second satellite may be configured to operate in one or more of the second orbit, a third orbit and a fourth orbit.

In some implementations, optimizing allocation of orbit transfer maneuver requirements between the first satellite and the second satellite may include configuring propulsion and/or attitude control subsystems of the respective satellites so as to better conform with a respective allocated orbit transfer maneuver requirement. For example, where the first satellite is allocated most or all of the orbit transfer maneuver requirement, the first satellite's propulsion subsystem may be configured with equipment having relatively high characteristic performance, cost and dry mass such as high specific impulse electric propulsion equipment and/or high thrust bipropellant equipment. In contrast, the second satellite's propulsion subsystem may be configured to include equipment having relatively low characteristic performance, cost and dry mass such as monopropellant thrusters and/or cold gas thrusters.

In some implementations, the method of designing a payload stack of at least two satellites, such as the system described above, for example, includes performing a quantitative optimization of design parameters of the first satellite and the second satellite, the quantitative optimization including optimizing an objective function of the system of at least two satellites. The objective function may be or include, for example, launch cost, dry mass or payload capability.

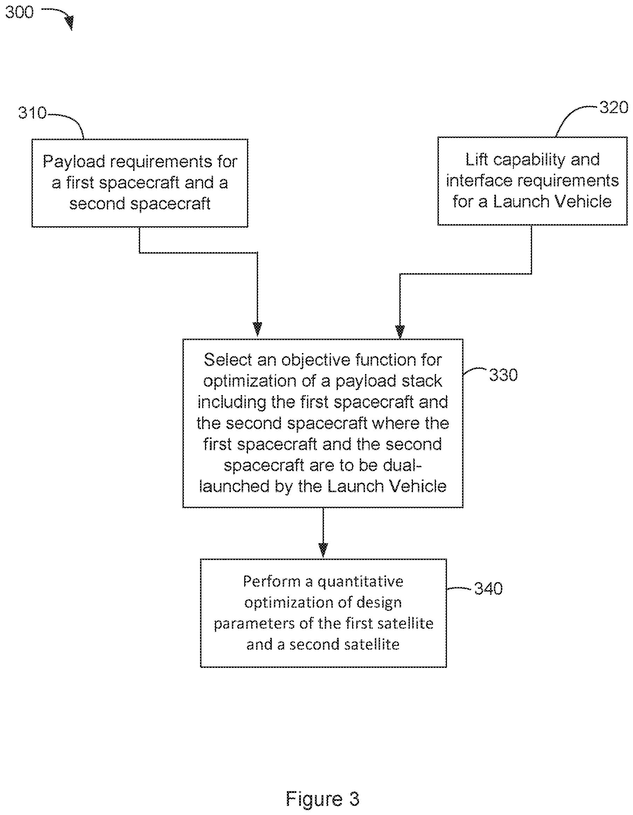

Referring now to Figure 3, a method 300 for designing a payload stack of at least two satellites will be described. The payload stack may include a first satellite and a second satellite, each satellite including a respective payload. As described hereinabove, the at least two satellites may be configured to be disposed together, in a launch configuration, for launch by a single launch vehicle. More particularly, in the launch configuration, the first satellite may be mechanically coupled with a primary payload adapter of the launch vehicle. The first satellite may include a secondary payload adapter so that, in the launch configuration, the second satellite is mechanically coupled with the secondary payload adapter of the first satellite. The payload stack may be configured to be deployed, following injection into a first orbit by the launch vehicle, by separating the first satellite from the primary payload adapter while the second satellite is mechanically coupled with the secondary payload adapter.

The respective payloads of the first satellite and the second satellite may each be configured to comply with respective payload requirements, as obtained at block 310. Payload requirements may be defined in terms of performance, life and reliability, for example. Performance requirements may include, in the case of a communications payload, frequency, bandwidth and power requirements for a number of transponders and/or communications links, for example. In the case of an imaging payload performance requirements may include image resolution and field-of-view, for example.

The payload stack may be configured to comply with the lift capability and interface requirements of a launch vehicle, as obtained at block 320. For example, a particular launch vehicle may have a specified launch mass that the launch vehicle is capable of delivering to a specific orbit. Other requirements with which the payload stack may be configured to comply may include, for example, launch vehicle fairing envelope, primary payload adapter interfaces and launch environmental requirements.

Subject to meeting the requirements obtained at block 310 and block 320, the presently disclosed techniques contemplate optimizing the payload stack configuration. More particularly, in accordance with the method 300, an objective function may be selected at block 330. The objective function may include, for example, dry mass of the payload stack, total cost or cost per transponder, including satellite and launch vehicle costs.

The objective function, at block 340, may be optimized by performing a quantitative optimization of design parameters of the first satellite and a second satellite. In some implementations the quantitative optimization may include an iterative series of mission analysis trade studies, each mission analysis trade study including a determination of one or more of satellite life and dry mass for an assumed allocation of orbit transfer maneuver capability between the first satellite and the second satellite.

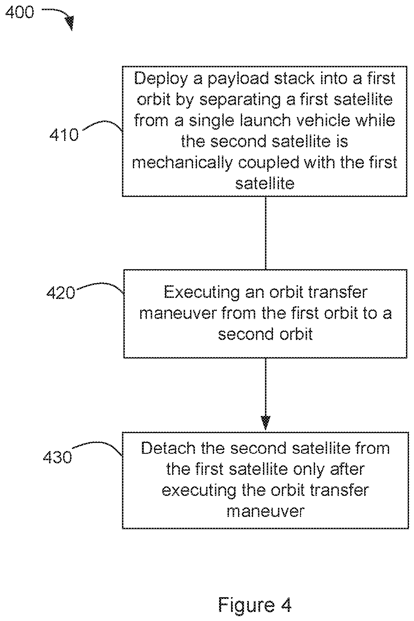

Referring now to Figure 4, a method 400 for delivering each satellite in a payload stack, launched by a single launch vehicle, into a respective operational orbit will be described. The method may begin, at block 410, by deploying the payload stack, following injection into a first orbit by the single launch vehicle. As described hereinabove the payload stack may include at least a first satellite and a second satellite the first satellite and the second satellite configured to be disposed together, in a launch configuration, for launch by the single launch vehicle. deploying the payload stack may include separating the first satellite from the single launch vehicle while the second satellite is mechanically coupled with the first satellite. The first satellite and the second satellite may have respective mass fractions that substantially different for the second satellite than for the first satellite, irrespective of whether the wet mass of the second satellite is smaller or larger than the wet mass of the first satellite.

The method 400 may continue at block 420 by executing an orbit transfer maneuver from the first orbit to a second orbit. At least a substantial portion of the orbit transfer maneuver may be executed by a propulsion system included in the first satellite. At block 430, the second satellite may be detached from the first satellite only after executing the orbit transfer maneuver. Respective payloads of each of the first satellite and the second satellite may be configured to be operated in one or more of the second orbit, a third orbit and a fourth orbit.

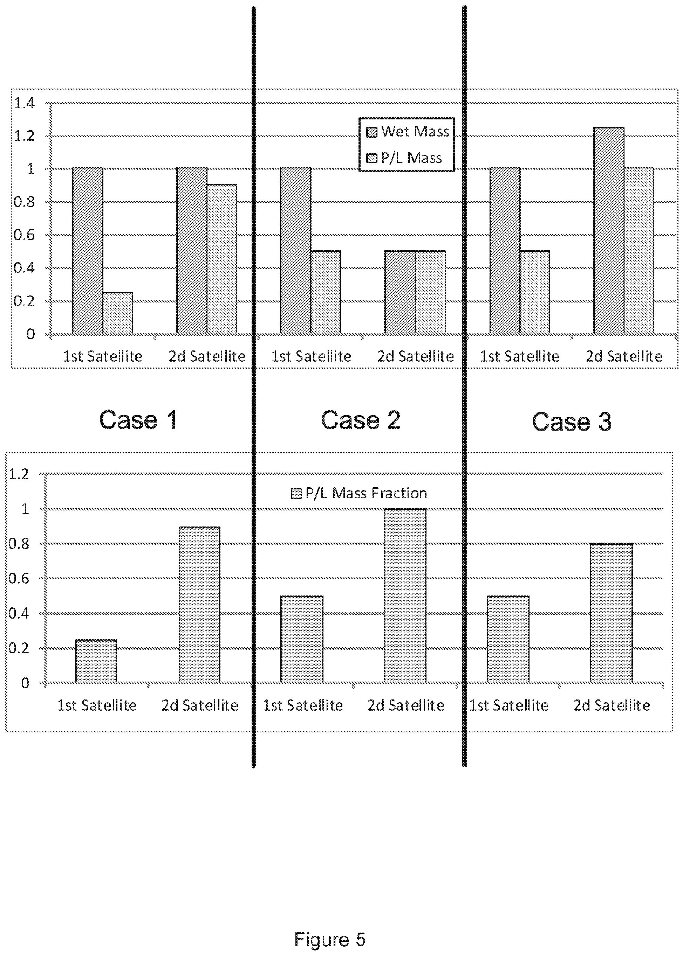

Figure 5 illustrates an example of possible results of an optimization technique carried out the techniques disclosed above. In an example "Case 1" a wet mass of the first satellite and the second satellite is approximately equal. The second satellite, in the illustrated example includes, at launch, a relatively small amount of propellant, such that the payload mass fraction is 0.9. The first satellite, on the other hand, has a mass fraction of 0.25 because in the illustrated example the first satellite carries, in addition to sufficient propellant for its own mission requirements, propellant sufficient to perform at least a substantial portion of the orbit raising required by the second satellite. In an example "Case 2" a payload mass of the first satellite and the second satellite is approximately equal. The second satellite, in the illustrated example, includes no propellant; accordingly, the payload mass fraction is 1. The first satellite, on the other hand, has a mass fraction of 0. 5 because in the illustrated example the first satellite carries, in addition to sufficient propellant for its own mission requirements, propellant sufficient to perform all of the orbit raising required by the second satellite. In an example "Case 3", a payload mass of the second satellite is approximately two times a payload mass of the first satellite. The second satellite, in the illustrated example includes, at launch, a relatively small amount of propellant, such that the payload mass fraction is 0.8. The first satellite, on the other hand, has a mass fraction of 0. 5 because in the illustrated example the first satellite carries, in addition to sufficient propellant for its own mission requirements, propellant sufficient to perform at least a substantial portion of the orbit raising required by the second satellite.

The foregoing merely illustrates principles of the invention. It will thus be appreciated that those skilled in the art will be able to devise numerous systems and methods which, although not explicitly shown or described herein, embody said principles of the invention and are thus within the scope of the invention as defined by the following claims.

## Claims

1. A method comprising:
designing a payload stack of at least two satellites, the payload stack including at least a first satellite (210(1)) and a second satellite (210(2)), each of the first satellite and the second satellite including a respective payload, the first satellite and the second satellite configured to be disposed together, in a launch configuration, for launch by a single launch vehicle; wherein:
said designing includes performing a quantitative optimization of design parameters of the first satellite and the second satellite, the quantitative optimization including optimizing an objective function (330, 340) of the payload stack, the objective function representing overall performance of the payload stack taking into account one or more of launch vehicle capability, launch vehicle fairing volume utilization, launch vehicle mass utilization, and orbit-raising requirements;
the payload stack is configured to be deployed, following injection into a first orbit by the single launch vehicle, by separating the first satellite from the single launch vehicle while the second satellite is mechanically coupled with the first satellite;
the first satellite includes a first onboard propulsion subsystem configured to execute an orbit transfer maneuver from the first orbit to a second orbit;
in an on-orbit configuration, the second satellite is detached from the first satellite only after execution of the orbit transfer maneuver;
the respective payload of each of the first satellite and the second satellite is configured to be operated in one or both of the second orbit, a third orbit and a fourth orbit;
the first satellite has a first mass in the launch configuration, and the second satellite has a second mass in the launch configuration, the second mass being 30% to 70% of the first mass; and
delivering each satellite in the payload stack, launched by a single launch vehicle, into a respective operational orbit.

2. The method of claim 1, wherein the first onboard propulsion subsystem includes one or both of high specific impulse electric propulsion equipment and high thrust bipropellant equipment.

3. The method of claim 2, wherein the second satellite includes a second on board propulsion subsystem, the second onboard propulsion subsystem including one or both of a monopropellant thruster and a cold gas thruster.

4. The method of claim 1, wherein the payload stack has a configuration design that results from an allocation of orbit transfer maneuver capability between the first satellite and the second satellite and wherein the allocation of orbit transfer maneuver capability is determined as a result of the quantitative optimization of design parameters.

5. The method of claim 4, wherein the allocation of orbit transfer maneuver capability is such that most or all of the orbit transfer maneuver capability is allocated to the propulsion subsystem of the first satellite.

6. A method comprising delivering into a respective operational orbit each satellite of a payload stack, launched by a single launch vehicle, including at least two satellites, wherein the payload stack has been designed by a method comprising:
designing a payload stack of at least two satellites including at least a first satellite (210(1)) and a second satellite (210(2)), each of the first satellite and the second satellite including a respective payload, the first satellite and the second satellite configured to be disposed together, in a launch configuration, for launch by a single launch vehicle; wherein:
said designing includes performing a quantitative optimization of design parameters of the first satellite and the second satellite, the quantitative optimization including optimizing an objective function (330, 340) of the payload stack, the objective function representing overall performance of the payload stack taking into account one or more of launch vehicle capability, launch vehicle fairing volume utilization, launch vehicle mass utilization, and orbit-raising requirements;
the payload stack is configured to be deployed, following injection into a first orbit by the single launch vehicle, by separating the first satellite from the single launch vehicle while the second satellite is mechanically coupled with the first satellite;
the first satellite includes a first onboard propulsion subsystem configured to execute an orbit transfer maneuver from the first orbit to a second orbit;
in an on-orbit configuration, the second satellite is detached from the first satellite only after execution of the orbit transfer maneuver;
the respective payload of each of the first satellite and the second satellite is configured to be operated in one or both of the second orbit, a third orbit and a fourth orbit;
the first satellite has a first mass in the launch configuration, and the second satellite has a second mass in the launch configuration, the second mass being 30% to 70% of the first mass.

## Patentansprüche

1. Verfahren, das Folgendes umfasst:
Entwerfen eines Nutzlaststapels von wenigstens zwei Satelliten, wobei der Nutzlaststapel wenigstens einen ersten Satelliten (210(1)) und einen zweiten Satelliten (210(2)) beinhaltet, wobei jeder des ersten Satelliten und des zweiten Satelliten eine jeweilige Nutzlast beinhaltet, der erste Satellit und der zweite Satellit konfiguriert sind, um zusammen, in einer Startkonfiguration, für einen Start durch eine einzelne Startrakete angeordnet zu werden;
wobei:
das Entwerfen ein Durchführen einer quantitativen Optimierung der Entwurfsparameter des ersten Satelliten und des zweiten Satelliten beinhaltet, die quantitative Optimierung das Optimieren einer Zielfunktion (330, 340) des Nutzlaststapels beinhaltet, die Zielfunktion eine Gesamtleistung des Nutzlaststapels unter Berücksichtigung von einer Startraketenfähigkeit, einer Auslastung eines Startraketenverkleidungsvolumens, einer Massenauslastung der Startrakete und/oder von Anforderungen an eine Erhöhung der Umlaufbahn beinhaltet;
der Nutzlaststapel konfiguriert ist, um, nach einem Schießen in eine erste Umlaufbahn durch die einzelne Startrakete, durch Trennen des ersten Satelliten von der einzelnen Startrakete eingesetzt zu werden, während der zweite Satellit mit dem ersten Satelliten mechanisch gekoppelt ist;
der erste Satellit ein erstes Onboard-Antriebssubsystem beinhaltet, das konfiguriert ist, um ein Umlaufbahnübertrittsmanöver von der ersten Umlaufbahn zu einer zweiten Umlaufbahn auszuführen;
in einer Konfiguration auf der Umlaufbahn der zweite Satellit erst nach Ausführung des Umlaufbahnübertrittsmanövers von dem ersten Satelliten getrennt wird;
die jeweilige Nutzlast jedes des ersten Satelliten und des zweiten Satelliten konfiguriert ist, um in einer oder in beiden der zweiten Umlaufbahn, einer dritten Umlaufbahn und einer vierten Umlaufbahn betrieben zu werden;
der erste Satellit eine erste Masse in der Startkonfiguration aufweist und der zweite Satellit eine zweite Masse in der Startkonfiguration aufweist, wobei die zweite Masse 30 % bis 70 % der ersten Masse beträgt; und
Liefern jedes Satelliten in dem Nutzlaststapel, der durch eine einzelne Startrakete gestartet wird, in eine entsprechende Betriebsumlaufbahn.

2. Verfahren nach Anspruch 1, wobei das erste Onboard-Antriebssubsystem eine oder beide von hochspezialisierter elektrischer Antriebsausrüstung und Zweifachtreibstoffausrüstung mit hoher Schubkraft beinhaltet.

3. Verfahren nach Anspruch 2, wobei der zweite Satellit ein zweites Onboard-Antriebssubsystem beinhaltet, wobei das zweite Onboard-Antriebssubsystem eines oder beide eines Einfachtreibstofftriebwerks und eines Kaltgastriebwerks beinhaltet.

4. Verfahren nach Anspruch 1, wobei der Nutzlaststapel einen Konfigurationsentwurf aufweist, der sich aus einer Zuordnung der Umlaufübertrittsmanöverfähigkeit zwischen dem ersten Satelliten und dem zweiten Satelliten ergibt, und wobei die Zuordnung der Umlaufübertrittsmanöverfähigkeit als ein Ergebnis der quantitativen Optimierung von Entwurfsparametern bestimmt wird.

5. Verfahren nach Anspruch 4, wobei die Zuordnung der Umlaufübertrittsmanöverfähigkeit derart ist, dass der größte Teil oder die gesamte Umlaufübertrittsmanöverfähigkeit dem Antriebssubsystem des ersten Satelliten zugeordnet wird.

6. Verfahren, das das Liefern jedes Satelliten eines Nutzlaststapels, der durch eine einzelne Startrakete gestartet wird, einschließlich wenigstens zwei Satelliten, in eine jeweilige Betriebsumlaufbahn umfasst, wobei der Nutzlaststapel durch ein Verfahren entworfen wurde, das Folgendes umfasst:
Entwerfen eines Nutzlaststapels von wenigstens zwei Satelliten, einschließlich wenigstens eines ersten Satelliten (210(1)) und eines zweiten Satelliten (210(2)), wobei jeder des ersten Satelliten und des zweiten Satelliten eine jeweilige Nutzlast beinhaltet, der erste Satellit und der zweite Satellit konfiguriert sind, um zusammen, in einer Startkonfiguration, für den Start durch eine einzelne Startrakete angeordnet zu werden;
wobei:
das Entwerfen ein Durchführen einer quantitativen Optimierung der Entwurfsparameter des ersten Satelliten und des zweiten Satelliten beinhaltet, die quantitative Optimierung das Optimieren einer Zielfunktion (330, 340) des Nutzlaststapels beinhaltet, die Zielfunktion eine Gesamtleistung des Nutzlaststapels unter Berücksichtigung von einer Startraketenfähigkeit, einer Auslastung eines Startraketenverkleidungsvolumens, einer Massenauslastung der Startrakete und/oder von Anforderungen an eine Erhöhung der Umlaufbahn beinhaltet;
der Nutzlaststapel konfiguriert ist, um, nach einem Schießen in eine erste Umlaufbahn durch die einzelne Startrakete, durch Trennen des ersten Satelliten von der einzelnen Startrakete eingesetzt zu werden, während der zweite Satellit mit dem ersten Satelliten mechanisch gekoppelt ist;
der erste Satellit ein erstes Onboard-Antriebssubsystem beinhaltet, das konfiguriert ist, um ein Umlaufbahnübertrittsmanöver von der ersten Umlaufbahn zu einer zweiten Umlaufbahn auszuführen;
in einer Konfiguration auf der Umlaufbahn der zweite Satellit erst nach Ausführung des Umlaufbahnübertrittsmanövers von dem ersten Satelliten getrennt wird;
die jeweilige Nutzlast jedes des ersten Satelliten und des zweiten Satelliten konfiguriert ist, um in einer oder in beiden der zweiten Umlaufbahn, einer dritten Umlaufbahn und einer vierten Umlaufbahn betrieben zu werden;
der erste Satellit eine erste Masse in der Startkonfiguration aufweist und der zweite Satellit eine zweite Masse in der Startkonfiguration aufweist, wobei die zweite Masse 30 % bis 70 % der ersten Masse beträgt.

## Revendications

1. Procédé comprenant :
la conception d'une pile de charge utile d'au moins deux satellites, la pile de charge utile comportant au moins un premier satellite (210(1)) et un second satellite (210(2)), chacun du premier satellite et du second satellite comportant une charge utile respective, le premier satellite et le second satellite étant configurés pour être disposés ensemble, dans une configuration de lancement, pour un lancement par un lanceur unique ;
dans lequel :
ladite conception comporte la réalisation d'une optimisation quantitative des paramètres de conception du premier satellite et du second satellite, l'optimisation quantitative comportant l'optimisation d'une fonction objectif (330, 340) de la pile de charge utile, la fonction objectif représentant les performances globales de la pile de charge utile en prenant en compte l'une ou plusieurs parmi les capacités du lanceur, l'utilisation du volume de la coiffe du lanceur, l'utilisation de la masse du lanceur et les exigences d'élévation de l'orbite ;
la pile de charge utile est configurée pour être déployée, après injection dans une première orbite par le lanceur unique, en séparant le premier satellite du lanceur unique tandis que le second satellite est couplé mécaniquement au premier satellite ;
le premier satellite comporte un premier sous-système de propulsion embarqué configuré pour exécuter une manœuvre de transfert d'orbite de la première orbite à une deuxième orbite ;
dans une configuration en orbite, le second satellite n'est détaché du premier satellite qu'après exécution de la manœuvre de transfert d'orbite ;
la charge utile respective de chacun du premier satellite et du second satellite est configurée pour fonctionner dans l'une ou les deux parmi la deuxième orbite, une troisième orbite et une quatrième orbite ;
le premier satellite a une première masse en configuration de lancement, et le second satellite a une seconde masse en configuration de lancement, la seconde masse étant de 30 % à 70 % de la première masse ; et
la délivrance de chaque satellite dans la pile de charge utile est effectuée, lancé par un lanceur unique, sur une orbite opérationnelle respective.

2. Procédé selon la revendication 1, dans lequel le premier sous-système de propulsion embarqué comporte l'un ou les deux parmi un équipement de propulsion électrique à impulsion spécifique élevée et un équipement diergol à forte poussée.

3. Procédé selon la revendication 2, dans lequel le second satellite comporte un second sous-système de propulsion embarqué, le second sous-système de propulsion embarqué comportant l'un ou les deux parmi un propulseur monergol et un propulseur à gaz froid.

4. Procédé selon la revendication 1, dans lequel la pile de charge utile a une conception de configuration qui résulte d'une attribution de capacité de manœuvre de transfert d'orbite entre le premier satellite et le second satellite et l'attribution de capacité de manœuvre de transfert d'orbite étant déterminée à la suite de l'optimisation quantitative des paramètres de conception.

5. Procédé selon la revendication 4, dans lequel l'attribution de la capacité de manœuvre de transfert d'orbite est telle qu'une grande partie ou la totalité de la capacité de manœuvre de transfert d'orbite est attribuée au sous-système de propulsion du premier satellite.

6. Procédé comprenant la délivrance dans une orbite opérationnelle respective de chaque satellite d'une pile de charge utile, lancé par un lanceur unique, comportant au moins deux satellites, la pile de charge utile ayant été conçue par un procédé comprenant :
la conception d'une pile de charge utile d'au moins deux satellites comportant au moins un premier satellite (210(1)) et un second satellite (210(2)), chacun du premier satellite et du second satellite comportant une charge utile respective, le premier satellite et le second satellite étant configurés pour être disposés ensemble, dans une configuration de lancement, pour un lancement par un lanceur unique ;
dans lequel :
ladite conception comporte la réalisation d'une optimisation quantitative des paramètres de conception du premier satellite et du second satellite, l'optimisation quantitative comportant l'optimisation d'une fonction objectif (330, 340) de la pile de charge utile, la fonction objectif représentant les performances globales de la pile de charge utile en prenant en compte l'une ou plusieurs parmi les capacités du lanceur, l'utilisation du volume de la coiffe du lanceur, l'utilisation de la masse du lanceur et les exigences d'élévation de l'orbite ;
la pile de charge utile est configurée pour être déployée, après injection dans une première orbite par le lanceur unique, en séparant le premier satellite du lanceur unique tandis que le second satellite est couplé mécaniquement au premier satellite ;
le premier satellite comporte un premier sous-système de propulsion embarqué configuré pour exécuter une manœuvre de transfert d'orbite de la première orbite à une deuxième orbite ;
dans une configuration en orbite, le second satellite n'est détaché du premier satellite qu'après exécution de la manœuvre de transfert d'orbite ;
la charge utile respective de chacun du premier satellite et du second satellite est configurée pour fonctionner dans l'une ou les deux parmi la deuxième orbite, une troisième orbite et une quatrième orbite ;
le premier satellite a une première masse en configuration de lancement, et le second satellite a une seconde masse en configuration de lancement, la seconde masse étant de 30 % à 70 % de la première masse.
